# FASCICULE DE BREVET EUROPEEN

(11) **EP 3 300 944 B1**
(45) Date de publication et mention de la délivrance du brevet: **21.10.2020**
(21) Numéro de dépôt: 17192073.9
(22) Date de dépôt: 20.09.2017
(51) Int. Cl.: B60N 2/02, B60N 2/00, B60N 2/58, B60Q 3/233, B60Q 1/50, B60Q 3/12, B60Q 3/16, B60Q 3/18, B60Q 3/54, B60Q 3/64, B60Q 3/80

(54) **DISPOSITIF LUMINEUX D'INDICATION D'UN ETAT DE CONFIGURATION D'UN SIEGE DE VEHICULE**
LEUCHTVORRICHTUNG ZUM ANZEIGEN DES KONFIGURATIONSZUSTANDS EINES FAHRZEUGSITZES
LIGHT DEVICE FOR INDICATING A STATE OF CONFIGURATION OF A VEHICLE SEAT

(30) Priorité: 28.09.2016 FR 1659199
(43) Date de publication de la demande: 04.04.2018
(73) Titulaire: Valeo Vision, 93012 Bobigny Cedex (FR)
(72) Inventeur: FLEURENCE, Thierry, 93012 Bobigny Cedex (FR); STEFURA, Eric, 93012 Bobigny Cedex (FR)
(74) Mandataire: Valeo Vision

(56) Documents cités:
- DE-A1-102012 013 550
- JP-A- 2011 121 500
- US-A1- 2010 295 670
- US-A1- 2014 265 478

## Description

Le domaine de la présente invention est celui des éclairages intérieurs des véhicules automobiles.

Les sièges de véhicule automobile peuvent être configurables pour s'adapter à la morphologie de leurs occupants, et notamment pour l'obtention d'une position de conduite optimale. Il est ainsi possible de modifier l'inclinaison du dossier, et/ou la hauteur du siège, et/ou la distance du siège par rapport au volant, pour être installé au mieux par rapport aux rétroviseurs, au volant, et au pare-brise. Il est également possible de régler la température du siège, la position de l'appuie-tête ou d'autres éléments.

Les utilisateurs de véhicule ont des besoins ou des préférences particuliers, en termes de position de conduite notamment. Ceux qui partagent un même véhicule doivent changer régulièrement, voire quotidiennement, la configuration de leur siège, que ce siège soit un siège conducteur ou passager. Ce changement répété de la configuration du siège entraine une perte de temps, ainsi que la possibilité que la nouvelle position ne soit pas adaptée fidèlement à la position de conduite souhaitée. Or, une position de conduite inadaptée peut s'avérer dangereuse, en modifiant les repères et les habitudes du conducteur.

D'autres utilisateurs peuvent avoir des besoins particuliers. C'est notamment le cas des personnes handicapés, des personnes à mobilité réduite, des personnes âgées ou des enfants. Ces personnes n'ont pas toujours la possibilité de régler le siège avant ou après s'y être installé. La mise en conformité de la configuration du siège par une tierce personne peut être source de danger, en fonction de l'environnement. Il en va de même pour l'installation d'un rehausseur ou d'un siège bébé.

Les sièges peuvent être réglés manuellement, par le biais d'un ensemble de leviers disposés à différents endroits du siège et de l'habitacle, ou électriquement par le biais de commandes disposées sur ou à côté du siège. Quel que soit le type de réglage, il peut être opportun pour l'utilisateur de savoir si la configuration de son siège est conforme à celle qu'il souhaite.

Les publications US 2010/295670 A1 et US 2014/265478 A1 divulguent des exemples de l'art antérieur.

L'invention s'inscrit dans ce contexte et elle vise à proposer un dispositif lumineux d'indication de l'état de configuration d'un siège de véhicule automobile comprenant les caractéristiques techniques de la revendication 1.

Selon différentes caractéristiques de l'invention, on pourra prévoir que :
- l'état de configuration comprend au moins un état non conforme et un état conforme, l'éclairage du siège par le dispositif lumineux différant selon l'état de configuration de l'au moins une partie du siège ;
- l'état de configuration comprend au moins un état intermédiaire de configuration, l'état intermédiaire de configuration étant un état entre l'état conforme et l'état non conforme ;
- le dispositif lumineux comprend un module de commande pouvant être configuré pour modifier l'éclairage de l'au moins une partie du siège en fonction de l'identité d'un utilisateur du véhicule ;
- le dispositif lumineux comprend au moins un moyen de projection disposé dans au moins une partie du siège ;
- le ou les modules d'éclairage peuvent être disposés dans au moins un élément parmi les suivants : l'assise, le dossier, l'appuie tête, un accoudoir ou le support de l'assise ;
- la au moins une partie du siège dans laquelle est disposé le au moins un moyen de projection comprend soit des fibres lumineuses qui forment le revêtement du siège, soit une partie translucide et/ou transparente, qui permet de rendre apparent les faisceaux lumineux émis par des dispositifs intégrés dans la structure du siège ;
- le dispositif lumineux comprend au moins un moyen de projection disposé dans au moins un élément structurel de l'habitacle du véhicule ; et cet élément structurel peut notamment être un plafond de l'habitacle, un plafonnier, un montant d'une portière, un volant, un tableau de bord ou une console centrale ;
- le passage du siège d'un état non configuré à un état configuré est initié par l'une des méthodes suivantes : programmation horaire, déclenchement anticipé, détection par le poids de l'utilisateur, détention par caméra / empreinte digitale / vocale, détection par identification de la clé ou d'un élément de la clé, de façon automatique ou délibérément par un utilisateur, détection par un moyen mobile, notamment un téléphone mobile, un smartphone ou une tablette ou tout autre moyen mobile de communication.

L'invention a également trait à un ensemble de configuration d'un siège de véhicule automobile comprenant au moins un dispositif lumineux conforme aux caractéristiques précitées.

L'invention concerne également un siège de véhicule automobile comprenant un dispositif lumineux embarqué, c'est-à-dire logé dans l'épaisseur du siège.

Enfin, l'invention concerne un procédé d'indication de la configuration d'un siège de véhicule par éclairage de tout ou partie du siège en fonction de la configuration ou de l'évolution de la configuration du siège. Selon cet aspect de l'invention, on réalise au moins l'acquisition d'une donnée représentative de la configuration ou de son évolution et une étape ultérieure de configuration de l'éclairage du siège en fonction de cette donnée, ainsi que la mise en œuvre du procédé d'éclairage dans un habitacle de véhicule automobile.

D'autres caractéristiques, détails et avantages de l'invention ressortiront plus clairement à la lecture de la description donnée ci-après à titre indicatif en relation avec des dessins dans lesquels :
- la figure 1 est une représentation schématique, de côté, d'un véhicule automobile dont l'habitacle est équipé d'un dispositif lumineux d'indication de l'état de configuration d'un siège selon un premier mode de réalisation de l'invention, les portes latérales étant ici rendues transparentes pour faciliter la lecture de la figure ;
- la figure 2 est une illustration schématique d'un mode de réalisation d'un moyen de projection équipant le dispositif lumineux de la figure 1 ; et
- la figure 3 est une vue en perspective d'un siège qui comportent plusieurs zones de projection d'informations relatives à l'état de configuration de parties de siège correspondantes.

Il faut tout d'abord noter que les figures exposent l'invention de manière détaillée pour mettre en œuvre l'invention, lesdites figures pouvant bien entendu servir à mieux définir l'invention le cas échéant.

Un habitacle 2 d'un véhicule automobile 10 est équipé d'au moins un siège configurable 16 et d'au moins un ensemble de configuration de ce siège qui comporte notamment un dispositif lumineux 1 configuré pour donner une indication lumineuse de l'état de configuration de tout ou partie du siège 16, et qui peut comporter en outre un système de contrôle de la configuration des sièges et un système de détection de l'usager du siège.

Le système de contrôle est configuré pour d'une part émettre des instructions de commande envoyées vers des moyens de réglage de la configuration du siège 16 ou de l'une de ses parties, ces moyens de réglage étant mis en œuvre pour changer la configuration du siège 16 selon les préférences ou les instructions d'un utilisateur, et pour d'autre part traiter des données sur la configuration du siège, ces données étant reçues par l'intermédiaire de capteurs embarqués dans le siège 16. Ces données peuvent être poussées vers le système de contrôle en temps réel ou envoyées sur requête du module de commande.

Le système de détection comprend des moyens de détection d'un utilisateur, afin de piloter la configuration du siège en fonction de l'utilisateur et de ses préférences.

Selon l'invention, on détecte l'utilisateur amené à s'installer dans un siège 16 configurable. Par siège 16 configurable, on entend un siège 16 qui peut prendre au moins une configuration initiale, à savoir la configuration d'usine ou la configuration laissée par le dernier utilisateur, et une configuration finale, à savoir la configuration souhaitée par l'utilisateur.

Lorsque l'utilisateur est détecté, un module de calcul, présent dans un module de commande, détermine si la configuration du siège 16 doit être modifiée, et si oui, détermine quelle partie du siège 16 doit être configurée et quelle doit être la configuration finale, avant de lancer une séquence de modification de la configuration du siège 16.

Le dispositif lumineux 1 est particulier en ce qu'il comporte des moyens de projection 4 d'un faisceau lumineux 6 configuré pour présenter des informations 8 au conducteur et/ou au passager avant assis à côté du conducteur, et/ou au(x) passager(s) arrières. Les moyens de projection 4 d'un faisceau lumineux 6 peuvent être configurés pour présenter des informations 8 au conducteur et/ou au passager alors qu'ils sont en dehors du véhicule 10. Les moyens de projection 4 sont pilotés, en fonction d'instructions reçues par le module de commande, par un ou plusieurs actionneurs.

On va maintenant décrire les moyens de projection 4 du dispositif lumineux 1.

Les moyens de projection 4 comprennent au moins une source lumineuse 12 et au moins un dispositif optique 14 associé pour la mise en forme des rayons émis par la source lumineuse 12.

Les moyens de projection 4 peuvent également comprendre le cas échéant un support de ces composants pour permettre leur pivotement.

Le module de commande est configuré pour générer des instructions de commande de la source lumineuse 12 et des instructions de commande du dispositif optique 14.

La source lumineuse 12 peut être une ampoule à incandescence, une ou plusieurs LEDs de couleurs, éventuellement différentes, ou LEDs blanches ou de type RGB, ou tout autre type de source lumineuse.

Le ou les dispositifs optiques 14 peuvent être des guides de lumière, des lentilles, des fibres ou des textiles lumineux ou encore un réflecteur.

Les moyens de projection 4, l'un de leurs éléments ou leur support sont montés pivotant, de manière à pouvoir diriger les rayons émis par la source lumineuse 12 et traités par les dispositifs optiques 14 selon les besoins de présentation des informations 8.

On va distinguer dans ce qui suit deux modes de réalisation de l'invention, distincts en ce que le dispositif lumineux 1 agencé pour éclairer au moins une partie de siège 16 fonctionne en rétroprojection, depuis l'intérieur du siège 16, ou en projection frontale, depuis un élément structurel de l'habitacle 2.

Dans un premier mode de réalisation de l'invention, le dispositif lumineux 1 peut être positionné dans au moins une partie du siège 16, et notamment l'un parmi les éléments du siège 16 que sont une assise 18, un dossier 20, un appuie-tête 22, un accoudoir 24 ou un support 54 de l'assise 18. Le dispositif lumineux 1 peut être agencé sur la totalité d'un élément, ou peut se restreindre à une portion de celui-ci, par exemple l'ensemble d'un accoudoir 24, ou seulement l'extrémité libre de celui-ci. De préférence, le faisceau lumineux 6 est visible depuis l'extérieur du véhicule 10, et notamment par la fenêtre, le pare-brise ou par la portière lorsque celle-ci est ouverte, de façon à ce que l'information 8 soit visible le plus tôt possible par l'utilisateur.

Dans ce premier mode de réalisation, on peut noter une première variante selon laquelle le dispositif optique 14 est formé par une fibre ou un textile lumineux, utilisé pour réaliser totalement ou partiellement la partie du siège 16 que l'on souhaite éclairer, et une deuxième variante selon laquelle le dispositif optique 14 est logé à l'intérieur du siège 16, sous le revêtement.

Dans la première variante, une source lumineuse 12 est agencée à une extrémité d'une fibre lumineuse correspondante. La source lumineuse 12 et l'extrémité correspondante de la fibre sont logées dans une partie du siège 16 pour être protégées des chocs et pour ne pas gêner l'assise de l'utilisateur.

Dans la deuxième variante, on prévoit une intensité lumineuse suffisante pour éclairer à travers le tissu, ou bien on prévoit une zone de tissu transparente et/ou translucide en regard de laquelle est disposé le dispositif optique 14 logé dans le siège 16, qui permet de rendre apparents les faisceaux lumineux émis par des dispositifs intégrés dans la structure du siège : le faisceau lumineux 6 émis par les moyens de projection 4 composés des sources lumineuses 12 et de dispositifs optiques 14, traverse la zone transparente et/ou translucide.

Il est possible d'avoir un type de dispositif lumineux 1 disposé dans une partie du siège 16, et un autre type de dispositif lumineux 1 dans une autre partie du siège 16, chaque dispositif lumineux 1 pouvant être dans un état lumineux différent selon l'état de configuration de la partie du siège 16 qui lui est propre.

Dans un second mode de réalisation de l'invention, le dispositif lumineux 1 peut être positionné dans au moins un élément structurel de l'habitacle 2 du véhicule 10. Un tel élément structurel peut être un plafond 26 de l'habitacle 2, un plafonnier 28, un montant de la portière, la portière en elle-même, un volant 34, un élément du tableau de bord, une console centrale 56 ou encore un rétroviseur, cette liste étant donnée à titre d'exemple non limitatif.

Dans ce mode de réalisation, la source lumineuse 12 est préférentiellement une ou plusieurs LEDs disposées seules, en groupe ou en séries mais peut être tout type de source lumineuse.

Dans ce même mode de réalisation, le ou les dispositifs optiques 14 sont préférentiellement des guides de lumière 38, des lentilles 40, 42 et / ou des réflecteurs 60, ces dispositifs optiques étant configurés pour que le faisceau lumineux qu'ils participent à générer soit orienté vers la partie de siège à éclairer.

Il est possible d'avoir un dispositif lumineux disposé dans un élément structurel de l'habitacle 2 du véhicule 10, et un autre dispositif lumineux dans un autre élément structurel de l'habitacle 2, chaque dispositif lumineux pouvant générer des faisceaux lumineux 6 d'aspects différents selon l'état de configuration de la partie du siège 16 qu'il éclaire.

Les variantes présentées dans les deux modes de réalisation ne sont en aucun cas mutuellement exclusives. Il est tout à fait envisageable d'avoir un premier dispositif lumineux positionné dans au moins une partie du siège 16, et un second dispositif lumineux positionné dans au moins un des éléments structurels de l'habitacle 2.

Le dispositif lumineux 1 est réglable en fonction de l'utilisateur. Des utilisateurs différents du même véhicule 10 peuvent choisir une séquence d'éclairage particulière, une ou plusieurs couleurs, une variation d'intensité, un nombre particulier de faisceau lumineux 6, quelles informations 8 sont à afficher, et tout autre caractéristique modulable d'un faisceau lumineux 6.

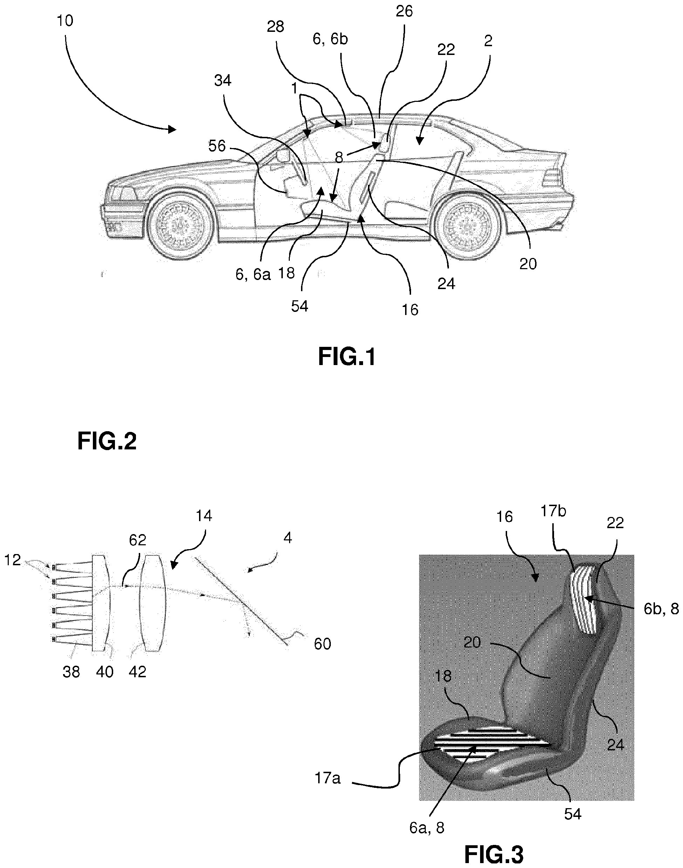

Sur la figure 2, on a illustré un exemple de moyens de projection 4 configurés pour générer un faisceau lumineux 6 illuminant au moins une partie de siège. On comprend que cet exemple de réalisation peut plus pratiquement être mis en œuvre dans le deuxième mode de réalisation où des rayons 62 émis par les sources lumineuses 12 sont traités optiquement par des dispositifs optiques 14, et notamment par une pluralité de guides de lumière 38, avec avantageusement un guide de lumière 38 par source lumineuse 12, une lentille 40, de préférence commune à tous les dioptres de sortie des guides de lumière 38, et éventuellement une lentille additionnelle 42 disposée sur le trajet des rayons en sortie de la lentille 40 pour la concentration du faisceau lumineux 6. Les rayons 62 émis par les sources lumineuses 12 peuvent être dirigés en l'état sur la partie de siège à éclairer, ou bien être dirigés vers un moyen de déviation optique, par exemple un réflecteur 60, de façon à être déviés vers cette partie du siège 16, la présence d'un réflecteur, notamment mobile autour d'un axe de rotation, pouvant permettre d'orienter différemment les rayons lumineux, et donc vers une partie de siège 16 ou vers une autre partie de siège 16.

On saura décrire ci-après les différentes formes que peut prendre le faisceau lumineux 6 généré par les moyens de projection 4 selon l'invention, qu'ils soient intégrés dans le siège 16 ou qu'ils soient agencés dans un élément structurel de l'habitacle 2 à distance du siège 16, en décrivant plusieurs cas d'application.

Le faisceau lumineux 6 peut en effet présenter diverses caractéristiques, que ce soit dans la forme, qui peut être impacté par le type de sources lumineuses 12 et de dispositifs optiques 14 utilisés, ou dans l'intensité lumineuse, la couleur ou encore, sans que cette liste soit exhaustive, le caractère statique ou dynamique.

Selon l'invention, au moins un faisceau lumineux 6 est destiné à éclairer une partie d'un siège 16 en fonction de l'état de configuration de cette partie de siège 16. Ceci peut impliquer plusieurs agencements possibles.

Un faisceau lumineux unique peut être prévu pour éclairer une unique partie de siège 16, et ce faisceau lumineux peut être statique ou dynamique. En variante, plusieurs faisceaux lumineux peuvent être prévus avec un faisceau lumineux spécifiquement dédié pour une partie de siège 16, ou plusieurs faisceaux lumineux dédiés pour une même partie de siège 16. Dans chacun de ces agencements, la ou les sources lumineuses 12 et le ou les dispositifs optiques 14 des moyens de projection 4 formant le faisceau lumineux 6 peuvent être pilotés par des actionneurs pour modifier une caractéristique du faisceau lumineux 6 en fonction de l'évolution de la configuration de la partie de siège 16 correspondante.

L'intensité du faisceau lumineux 6 peut être variable en fonction d'une instruction de pilotage de l'intensité d'alimentation de la source lumineuse 12 élaborée par le module de commande. Le faisceau peut avoir une forte puissance, ou être au contraire plus doux et se rapprocher de l'effet que pourrait donner un éclairage intérieur classique ou tamisé. Selon l'invention, l'intensité du faisceau lumineux 6 peut notamment varier en fonction de l'état de configuration de la partie de siège 16 à éclairer. A titre d'exemple, il peut être prévu que, lorsque la configuration du siège 16 n'est pas conforme, le faisceau lumineux 6 présente une intensité supérieure à une valeur prédéterminée, pour attirer l'attention de l'utilisateur sur le fait que le siège 16 n'est pas encore dans la bonne configuration.

Le faisceau lumineux 6 peut également prendre une couleur du spectre visible, ou une pluralité de couleurs issues de spectre. Dans le cas d'une pluralité de faisceaux lumineux 6, on peut prévoir que les faisceaux présentent une couleur commune ou que chaque faisceau présente une couleur qui lui est propre, fonction de l'état de configuration de la partie du siège 16 correspondante. La couleur du faisceau lumineux 6 peut être variable en fonction d'une instruction de pilotage de la couleur des rayons émis par la source lumineuse 12, l'instruction étant élaborée par le module de commande. On peut notamment utiliser une ou plusieurs diodes RGB, avec une instruction de pilotage de chacune des diodes rouges, vertes et bleues. Selon l'invention, la couleur du faisceau lumineux 6 peut notamment varier en fonction de l'état de configuration de la partie de siège 16 à éclairer. A titre d'exemple, il peut être prévu que, lorsque la configuration du siège 16 n'est pas conforme, le faisceau lumineux 6 présente une couleur rouge, pour attirer l'attention de l'utilisateur sur le fait que le siège 16 n'est pas encore dans la bonne configuration.

Un faisceau lumineux 6 peut éclairer de manière statique une partie de siège 16, ou éclairer dynamiquement cette même partie, notamment par un allumage de diodes successives ménagées dans cette partie de siège 16.

Notamment dans le cas où une pluralité de faisceaux lumineux 6 est prévue, un éclairage dynamique peut être réalisé par un éclairage successif de plusieurs parties de siège 16, qui peut alors se faire de manière discontinue, c'est-à-dire que le faisceau lumineux 6 est interrompu entre l'éclairage de deux parties de siège 16, ou être continu, en se déplaçant de l'une des parties de siège 16 vers un autre.

Les caractéristiques du faisceau lumineux 6 peuvent être amenées à être modifiées au cours de la configuration du siège 16 pour refléter l'évolution de la configuration du siège 16 ou tout au moins d'une partie de celui-ci, que ce soit un premier état de configuration initial, un deuxième état de configuration final, ou bien un état de configuration intermédiaire. Le changement de caractéristique du faisceau lumineux 6 peut être continu, pour refléter l'évolution en temps réel de la configuration du siège 16 et refléter le passage par une pluralité de configurations intermédiaires entre la configuration initiale et la configuration finale du siège 16, ou bien ce changement peut être saccadé, par paliers, le faisceau lumineux 6 changeant à chaque fois que la configuration du siège 16 atteint un état prédéterminé.

On saura, dans une variante de réalisation, conditionner l'intensité des faisceaux lumineux 6 en fonction de la luminosité extérieure, étant entendu que l'éclairage de zones précises ne serait pas discerné par l'usager en plein jour. Une information sera ainsi communiquée au module de commande en provenance d'un capteur de la luminosité extérieure au véhicule. A chaque séquence de modification de la configuration du siège 16, le module de commande fait référence à la valeur de luminosité détectée par le capteur correspondant. Si cette valeur de luminosité est supérieure à une valeur seuil déterminée, l'intensité du ou des faisceaux lumineux 6 peut être augmentée pour tâcher de rendre visibles les informations 8 par l'utilisateur, et le module reste en attente d'une prochaine détection d'entrée d'usager dans le véhicule 10.

Les informations 8 concernent la configuration du siège 16 de l'un des utilisateurs, et notamment du conducteur ou du passager avant assis à côté du conducteur. La configuration du siège 16 correspond à un ou plusieurs éléments ayant trait à la position et/ou la posture d'un utilisateur. Parmi ces éléments, on peut citer, à titre non exhaustif, l'éloignement du siège 16 par rapport au volant 34, l'inclinaison de l'assise 18, la hauteur du siège 16, l'inclinaison du dossier 20, l'inclinaison et la hauteur de l'appui tête 22, la présence ou non des accoudoirs 24, la fermeté du dossier 20 ou le réglage de la hauteur de la ceinture de sécurité. Les moyens de réglage pilotés par le système de contrôle sont configurés pour modifier l'une ou l'autre de ces caractéristiques.

Tel que cela a pu être précisé, le siège 16 peut prendre au moins deux états, à savoir un premier état non configuré pour accueillir l'utilisateur, c'est-à-dire un état de configuration non conforme, et un second état configuré pour accueillir l'utilisateur, c'est-à-dire un état de configuration conforme. Et le siège 16 peut également prendre un ou plusieurs états intermédiaires qui rendent compte de l'évolution entre le premier et le second état.

Le siège 16 peut évoluer d'une de ses configurations à l'autre suite à la détection d'un utilisateur, que ce soit par l'intermédiaire d'une caméra, d'un appareil mobile porté par l'utilisateur, ou d'un capteur de poids intégré dans le siège 16.

La configuration du siège 16 peut alternativement ou additionnellement être pilotée par préprogrammation, soit par programmation horaire récurrente ou exceptionnelle, soit par commande à distance par l'utilisateur.

La programmation horaire récurrente consiste à définir un utilisateur habituel à un horaire donné pour certains jours de la semaine, à configurer le siège selon les préférences de cet utilisateur et à afficher une information 8 destinée à donner une indication sur la configuration du siège 16 par rapport aux préférences de l'utilisateur déterminé lorsque celui-ci est détecté aux abords du véhicule 10.

La programmation horaire exceptionnelle consiste à programmer une configuration particulière pour un évènement à venir, sans récurrence dans le temps. La programmation horaire exceptionnelle permet ainsi de programmer le matin pour l'après-midi une configuration particulière pour un utilisateur en particulier, sans que cette configuration soit répétée au cours des jours ou des semaines suivants.

Enfin, l'utilisateur peut spontanément décider de se servir du véhicule 10, et requérir la configuration du siège 16 selon ses préférences. La requête peut être formulée via une interface de contrôle disponible sur un appareil électronique dédié, ou sur un ordinateur, un téléphone ou une tablette appartenant à l'utilisateur. L'utilisateur peut ensuite visuellement suivre la configuration et ne se diriger vers le véhicule 10 qu'une fois le siège 16 disposé conformément à ses préférences.

Les moyens de détection du système de détection peuvent notamment prendre la forme de moyens de détection vidéo ou des moyens de détection audio de l'utilisateur, des moyens de détection radio d'une clé ou d'un élément d'identification à distance, notamment par Bluetooth ou RFID. Le système de détection peut également comprendre des moyens de détection du smartphone de l'utilisateur. Le système de détection peut également comprendre des moyens d'identification des empreintes digitales, rétiniennes ou tout autre type d'empreinte propre à chaque utilisateur.

Les moyens de détection de l'utilisateur, quel que soit le type de détection choisi, envoient une donnée au système de contrôle, qui dans un premier temps associe à un utilisateur détecté une configuration spécifique du siège 16, puis détermine les modifications à apporter au siège 16 pour passer de la configuration actuelle à la configuration spécifique souhaitée, c'est-à-dire la configuration finale.

On a illustré sur la figure 3 un siège configurable 16, avec deux zones de support d'information spécifiques 17a,17b. Une première zone 17a correspond à l'assise 18 et une deuxième zone 17b correspond à l'appuie-tête 22. Chacune de ces zones peut être définie par une surface de fibres lumineuses lorsque le dispositif lumineux est embarqué dans le siège, ou bien définie par une zone de projection sur laquelle un faisceau lumineux peut être projeté depuis un dispositif lumineux embarqué dans un élément structurel de l'habitacle à distance du siège. Un premier faisceau lumineux 6a est réalisé par le pilotage d'un dispositif lumineux associé à l'assise du siège et un deuxième faisceau lumineux 6b est réalisé par le pilotage d'un dispositif lumineux associé à l'appuie-tête du siège. Dans l'exemple illustré, le premier faisceau lumineux 6a présente une intensité lumineuse plus importante que l'intensité lumineuse du deuxième faisceau lumineux 6b, par exemple pour avertir l'usager qu'une opération de configuration de l'assise est en cours alors qu'elle est terminée pour l'appuie-tête. Comme décrit précédemment, ces informations pourraient également être mises en œuvre par des couleurs différentes des deux faisceaux lumineux 6a et 6b.

On va maintenant décrire des cas d'utilisation du dispositif d'indication de la configuration d'un siège selon l'invention à travers la description d'au moins un procédé d'indication de la configuration d'un siège 16 par éclairage de tout ou partie du siège en fonction de la configuration et/ou de l'évolution de la configuration du siège.

Au cours de ce procédé, on réalise au moins l'acquisition d'une donnée représentative de la configuration du siège 16 ou de l'évolution de cette configuration et on réalise par la suite une étape d'éclairage du siège 16 en fonction de cette donnée.

Ces deux étapes peuvent être avantageusement répétées plusieurs fois. Notamment, l'acquisition d'une donnée peut être renouvelée plusieurs fois pour obtenir une image représentative de l'état de configuration du siège 16, avec une étape ultérieure d'éclairage du siège 16 à chaque fois que la donnée nouvellement acquise est différente de la donnée anciennement acquise, ou bien lorsque la différence entre l'une et l'autre est suffisamment importante pour justifier d'un ajustement de l'éclairage.

Le procédé peut être utilisé, simultanément ou non, pour chacun des sièges 16 configurables. C'est notamment le cas pour les sièges 16 à l'avant d'un véhicule 10, les sièges 16 situés à l'arrière pouvant être aménagés en banquette impossible à régler. Cependant, il est tout à fait envisageable, sans sortir du contexte de l'invention de proposer le même procédé, et le même dispositif, pour d'autres sièges 16 que ceux situés à l'avant.

Le système de détection est configuré pour détecter l'approche d'un utilisateur muni d'une clé pour le véhicule 10, par le biais d'un système RFID. Des variantes peuvent apparaître dans les cas d'utilisation, et par exemple dans la détection de l'utilisateur. Notamment, l'utilisateur voulant rentrer dans le véhicule 10 peut placer sa main sur la poignée ou la zone d'ouverture de la portière et un lecteur d'empreinte digitale peut identifier l'utilisateur, et transmettre cette reconnaissance au module de commande.

Le module de commande associe cette reconnaissance de l'utilisateur à une configuration du siège souhaitée et envoie les données relatives aux préférences de cet utilisateur au système de contrôle qui compare cette configuration finale à des données collectées sur l'état de configuration initial du siège 16.

Si la configuration de chaque partie du siège 16 est conforme aux préférences de l'utilisateur, le système de contrôle communique avec le module de commande du dispositif lumineux 1 d'indication de l'état de configuration du siège 16 et le module de commande est configuré pour déclencher dans ce cas le fonctionnement du dispositif lumineux d'indication d'un état de configuration du siège pour rendre compte de l'état correctement configuré du siège 16 et pour afficher les informations 8 correspondantes, par exemple via une multitude de faisceaux lumineux 6 de couleur verte sur chacune des parties du siège 16.

Dans le cas contraire, le système de contrôle communique avec le module de commande du dispositif lumineux 1 d'indication de l'état de configuration du siège 16 pour que celui-ci génère une information 8 sur les parties du siège 16 non conformes aux souhaits de l'utilisateur, par exemple une multitude de faisceaux lumineux 6 de couleur rouge sur chacune des parties du siège 16 non conformes. L'utilisateur, en s'approchant, voit le siège 16 de son véhicule s'illuminer en rouge pour signaler l'état non conforme. L'information délivrée à l'utilisateur peut évoluer progressivement au fur et à mesure que la configuration se rapproche de la configuration de consigne. La couleur du faisceau lumineux peut ainsi passer du rouge à l'orange, puis au jaune pour indiquer un écart de plus en plus réduit entre la configuration du siège et la configuration de consigne. Le faisceau lumineux peut également clignoter à une fréquence dépendant de cet écart, par exemple d'autant plus vite que la configuration est proche de la configuration de consigne.

Simultanément, le système de contrôle déclenche une séquence de modification de la configuration d'au moins une partie de siège 16, en générant des instructions de commande aux moyens de réglage du siège configurable. Pendant cette séquence de modification, le système de contrôle peut vérifier à intervalle régulier les données relatives à la configuration du siège 16, et communiquer avec le module de commande pour que celui-ci pilote le fonctionnement du dispositif lumineux pour l'obtention d'un ou plusieurs faisceaux lumineux 6 en fonction de l'état de configuration du siège. Les faisceaux lumineux 6 rouges deviennent progressivement orange, puis jaune, pour témoigner de la mise en conformité. Une fois le siège 16 en configuration finale, c'est à dire conforme aux préférences de l'utilisateur, le système de contrôle peut interrompre la séquence de modification, et communiquer avec le module de commande du dispositif lumineux 1 pour que celui-ci émette un faisceau 6 correspondant à une information 8 de conformité, comme par exemple un éclairage de l'ensemble du siège 16 par un faisceau lumineux 6 large et intense de couleur verte, faisceau qui peut se concentrer et dont l'intensité peut diminuer graduellement avant de disparaitre.

La description qui précède explique clairement comment l'invention permet d'atteindre les objectifs qu'elle s'est fixé et notamment de proposer un dispositif lumineux 1 qui permette de donner une information 8 à un utilisateur sur le fait que le siège soit correctement configuré, ce qui est un gage de sécurité notamment pour le conducteur du véhicule.

Bien entendu, diverses modifications peuvent être apportées par l'homme du métier au dispositif d'aide à la circulation qui vient d'être décrite à titre d'exemple non limitatif, dès lors que l'objet résultant des modifications est compris dans le périmètre tel que défini par les revendications.

## Revendications

1. Dispositif lumineux (1) d'indication de l'état de configuration d'un siège (16) comprenant des moyens de projection (4), un module de commande, les moyens de projection (4) étant pilotés, en fonction d'instructions reçues par le module de commande, par un ou plusieurs actionneurs, le dispositif lumineux (1) étant adapté pour être agencé pour éclairer au moins une partie du siège (16) en fonction d'au moins une donnée relative à l'état de configuration de cette au moins une partie d'un siège (16) par rapport à une instruction de configuration pour un utilisateur donné, où la configuration du siège (16) comprend le réglage d'une assise (18), de l'inclinaison d'un dossier (20), d'un appuie tête (22), la position d'un accoudoir (24), le réglage de la hauteur d'une ceinture de sécurité, de la distance à un volant (34), de la dureté de l'assise (18) ou du dossier (20), de la partie du siège située au niveau des lombaires de l'utilisateur.

2. Dispositif lumineux (1) selon la revendication précédente, **caractérisé en ce que** l'état de configuration de l'au moins une partie de siège comprend au moins un état non conforme et un état conforme, l'éclairage du siège (16) par le dispositif lumineux (1) différant selon l'état de configuration de l'au moins une partie du siège (16).

3. Dispositif lumineux (1) selon la revendication précédente, **caractérisé en ce que** l'état de configuration comprend au moins un état intermédiaire de configuration, l'état intermédiaire de configuration étant un état entre l'état conforme et l'état non conforme.

4. Dispositif lumineux (1) selon l'une quelconque des revendications précédentes, **caractérisé en ce que** le module de commande est configuré pour modifier l'éclairage de l'au moins une partie du siège (16) en fonction de l'identité d'un utilisateur du véhicule (10).

5. Dispositif lumineux (1) selon l'une quelconque des revendications précédentes, **caractérisé en ce qu'**au moins un des moyens de projection (4) est disposé dans au moins une partie du siège (16).

6. Dispositif lumineux (1) selon la revendication précédente, **caractérisé en ce que** l'au moins une partie du siège (16) dans laquelle est disposé le au moins un des moyens de projection (4) peut être : l'assise (18), le dossier (20), l'appuie tête (22), un accoudoir (24) ou le support (54) de l'assise (18).

7. Dispositif lumineux (1) selon la revendication 5 ou 6, **caractérisé en ce que** l'au moins une partie du siège (16) dans laquelle est disposé le au moins un des moyens de projection (4) comprend soit des fibres lumineuses qui forment le revêtement du siège, soit une partie translucide et/ou transparente, qui permet de rendre apparents les faisceaux lumineux émis par des dispositifs intégrés dans la structure du siège (16).

8. Dispositif lumineux (1) selon l'une quelconque des revendications précédentes, **caractérisé en ce qu'**au moins un des moyens de projection (4) est disposé dans au moins un élément structurel de l'habitacle (2) du véhicule.

9. Dispositif lumineux (1) selon la revendication précédente, **caractérisé en ce que** le au moins un élément structurel de l'habitacle (2) dans lequel est disposé le au moins un des moyens de projection (4) peut être : un plafond (26) de l'habitacle (2), un plafonnier (28), un montant (30) d'une portière, le volant (34) ou une console centrale (56).

10. Dispositif lumineux (1) selon l'une quelconque des revendications précédentes, **caractérisé en ce que** le passage du siège (16) d'un état non configuré à un état configuré est initié par l'une des méthodes suivantes : programmation horaire, déclenchement anticipé, détection par le poids de l'utilisateur, détention par caméra / empreinte digitale / vocale, détection par identification de la clé ou d'un élément de la clé, de façon automatique ou délibérément par un utilisateur, détection par un moyen mobile, notamment un téléphone mobile, un smartphone ou une tablette ou tout autre moyen mobile de communication.

11. Ensemble de configuration d'un siège (16) de véhicule (10) automobile comprenant au moins un dispositif lumineux (1) selon l'une quelconque des revendications précédentes.

12. Siège (16) d'un véhicule (10) automobile comprenant au moins un dispositif lumineux (1) selon l'une quelconque des revendications 5 à 7.

## Patentansprüche

1. Leuchtvorrichtung (1) zum Anzeigen des Konfigurationszustands eines Sitzes (16), umfassend Projektionsmittel (4), ein Steuermodul, wobei die Projektionsmittel (4) in Abhängigkeit von vom Steuermodul empfangenen Anweisungen durch ein oder mehrere Aktuatoren angesteuert werden, wobei die Leuchtvorrichtung (1) geeignet ist, eingerichtet zu werden, um mindestens einen Teil des Sitzes (16) in Abhängigkeit von mindestens einem Datenwert bezüglich des Konfigurationszustands dieses mindestens einen Teils eines Sitzes (16) in Bezug auf eine Konfigurationsanweisung für einen gegebenen Benutzer zu beleuchten, wobei die Konfiguration des Sitzes (16) das Einstellen einer Sitzfläche (18), der Neigung einer Rückenlehne (20), einer Kopfstütze (22), der Position einer Armlehne (24), das Einstellen der Höhe eines Sicherheitsgurtes, des Abstands zu einem Lenkrad (34), der Härte der Sitzfläche (18) oder der Rückenlehne (20), des auf Höhe der Lenden des Benutzers gelegenen Teils des Sitzes umfasst.

2. Leuchtvorrichtung (1) nach dem vorhergehenden Anspruch, **dadurch gekennzeichnet, dass** der Konfigurationszustand des mindestens einen Sitzteils mindestens einen nicht konformen Zustand und einen konformen Zustand umfasst, wobei sich die Beleuchtung des Sitzes (16) durch die Leuchtvorrichtung (1) je nach Konfigurationszustand des mindestens einen Teils des Sitzes (16) unterscheidet.

3. Leuchtvorrichtung (1) nach dem vorhergehenden Anspruch, **dadurch gekennzeichnet, dass** der Konfigurationszustand mindestens einen Konfigurationszwischenzustand umfasst, wobei der Konfigurationszwischenzustand ein Zustand zwischen dem konformen Zustand und dem nicht konformen Zustand ist.

4. Leuchtvorrichtung (1) nach einem der vorhergehenden Ansprüche, **dadurch gekennzeichnet, dass** das Steuermodul dazu konfiguriert ist, die Beleuchtung des mindestens einen Teils des Sitzes (16) in Abhängigkeit von der Identität eines Benutzers des Fahrzeugs (10) zu ändern.

5. Leuchtvorrichtung (1) nach einem der vorhergehenden Ansprüche, **dadurch gekennzeichnet, dass** mindestens eines der Projektionsmittel (4) in mindestens einem Teil des Sitzes (16) angeordnet ist.

6. Leuchtvorrichtung (1) nach dem vorhergehenden Anspruch, **dadurch gekennzeichnet, dass** der mindestens eine Teil des Sitzes (16), in dem das mindestens eine der Projektionsmittel (4) angeordnet ist, sein kann: die Sitzfläche (18), die Rückenlehne (20), die Kopfstütze (22), eine Armlehne (24) oder die Halterung (54) der Sitzfläche (18).

7. Leuchtvorrichtung (1) nach Anspruch 5 oder 6, **dadurch gekennzeichnet, dass** der mindestens eine Teil des Sitzes (16), in dem das mindestens eine der Projektionsmittel (4) angeordnet ist, entweder leuchtende Fasern umfasst, die den Bezug des Sitzes bilden, oder einen transluzenten und/oder transparenten Teil, der es ermöglicht, die von in die Struktur des Sitzes (16) integrierten Vorrichtungen emittierten Lichtstrahlen sichtbar zu machen.

8. Leuchtvorrichtung (1) nach einem der vorhergehenden Ansprüche, **dadurch gekennzeichnet, dass** mindestens eines der Projektionsmittel (4) in mindestens einem strukturellen Element des Innenraums (2) des Fahrzeugs angeordnet ist.

9. Leuchtvorrichtung (1) nach dem vorhergehenden Anspruch, **dadurch gekennzeichnet, dass** das mindestens eine strukturelle Element des Innenraums (2), in dem das mindestens eine der Projektionsmittel (4) angeordnet ist, sein kann: ein Dachhimmel (26) des Innenraums (2), eine Deckenleuchte (28), eine Säule (30) einer Tür, das Lenkrad (34) oder eine Mittelkonsole (56) .

10. Leuchtvorrichtung (1) nach einem der vorhergehenden Ansprüche, **dadurch gekennzeichnet, dass** der Übergang des Sitzes (16) aus einem nicht konfigurierten Zustand in einen konfigurierten Zustand durch die eine der folgenden Methoden eingeleitet wird: Zeitprogrammierung, vorzeitiges Auslösen, Erkennung anhand des Gewichts des Benutzers, Erkennung über Kamera/Fingerabdruck/Sprache, Erkennung durch Identifizierung des Schlüssels oder eines Elements des Schlüssels, automatisch oder absichtlich durch einen Benutzer, Erkennung anhand eines mobilen Mittels, insbesondere eines Mobiltelefons, eines Smartphones oder eines Tablets oder eines anderen mobilen Kommunikationsmittels.

11. Konfigurationsanordnung für einen Sitz (16) eines Kraftfahrzeugs (10), umfassend mindestens eine Leuchtvorrichtung (1) nach einem der vorhergehenden Ansprüche.

12. Sitz (16) für ein Kraftfahrzeug (10), umfassend mindestens eine Leuchtvorrichtung (1) nach einem der Ansprüche 5 bis 7.

## Claims

1. Lighting device (1) indicating a configuration state of a seat (16), comprising projection means (4), a control module, the projection means being controlled by one or more actuators as a function of instructions received by the control module the lighting device (1) being adapted to be arranged to illuminate at least one part of the seat (16) as a function of at least one datum relating to the configuration state of this at least one part of a seat (16) relative to a configuration instruction for a given user, wherein the configuration of the seat (16) comprises the adjustment of the seat base (18), of the rake of a backrest (20), of a headrest (22), the position of an armrest (24), adjustment of the height of a safety belt, the distance from a steering wheel (34), the firmness of the seat base (18) or the backrest (20), the part of the seat situated in the lumbar region of the user.

2. Lighting device (1) according to the preceding claim, **characterized in that** the configuration state of the at least one part of the seat comprises at least one non-conforming state and one conforming state, the illumination of the seat (16) by the lighting device (1) differing depending on the configuration state of the at least one part of the seat (16).

3. Lighting device (1) according to the preceding claim, **characterized in that** the configuration state comprises at least one intermediate configuration state, the intermediate configuration state being a state between the conforming state and the non-conforming state.

4. Lighting device (1) according to any of the preceding claims, **characterized in that** the control module is configured to modify the illumination of the at least one part of the seat (16) as a function of the identity of a user of the vehicle (10).

5. Lighting device (1) according to any of the preceding claims, **characterized in that** at least one of the projection means (4) is arranged in at least one part of the seat (16).

6. Lighting device (1) according to the preceding claim, **characterized in that** the at least one part of the seat (16) in which the at least one of the projection means (4) is arranged may be: the seat base (18), the backrest (20), the headrest (22), an armrest (24) or the support (54) of the seat base (18).

7. Lighting device (1) according to claim 5 or 6, **characterized in that** the at least one part of the seat (16) in which the at least one of the projection means (4) is arranged comprises either luminous fibers which form the seat covering, or a translucent and/or transparent portion which reveals the light beams emitted by devices integrated in the structure of the seat (16).

8. Lighting device (1) according to any of the preceding claims, **characterized in that** at least one of the projection means (4) arranged in at least one structural element of the cab (2) of the vehicle.

9. Lighting device (1) according to the preceding claim, **characterized in that** the at least one structural element of the cab (2) in which the at least one of the projection means (4) is arranged may be: a roof (26) of the cab (2), a roof light (28), a door pillar (30), a steering wheel (34) or a center console (56).

10. Lighting device (1) according to any of the preceding claims, **characterized in that** the passage of the seat (16) from a non-configured state to a configured state is initiated by one of the following methods: timed programming, anticipated actuation, detection by the weight of the user, detection by camera or fingerprint or voice, detection by identification of the key or an element of the key, automatically or deliberately by a user, detection by a mobile means, in particular a mobile telephone, a smartphone or a tablet or any other mobile communication means.

11. Assembly for configuring a seat (16) of a motor vehicle (10) comprising at least one lighting device (1) according to any of the preceding claims.

12. Seat (16) of a motor vehicle (10) comprising at least one lighting device (1) according to any of claims 5 to 7.
